# EUROPÄISCHE PATENTANMELDUNG

(11) **EP 3 770 077 A1**
(43) Veröffentlichungstag der Anmeldung: **27.01.2021**
(21) Anmeldenummer: 19187589.7
(22) Anmeldetag: 22.07.2019
(51) Int. Cl.: B65D 23/08

(54) **HÜLLE FÜR CO2-ZYLINDER**

(71) Anmelder: Sodapop Austria GmbH, 1070 Wien (AT)
(72) Erfinder: HERRMANN, Roland, 1130 Wien (AT)
(74) Vertreter: Kutzenberger Wolff & Partner

(57) **Zusammenfassung**

Die Erfindung betrifft eine Hülle (1) für CO₂-Zylinder (2), aufweisend eine Schale (3), wobei die Schale (3) einen Hohlraum (6) zum Aufnehmen eines CO₂-Zylinders (2) bildet, wobei die Hülle (1) von einem Leergutautomaten zur Rücknahme von Mehrwegflaschen aufnehmbar ist. Weiters betrifft die Erfindung ein Verfahren zum Recyceln eines CO₂-Zylinders (2), wobei ein CO₂-Zylinder (2) in eine Einführöffnung (7) einer Hülle (1) mit einer Schale (3) eingeführt wird, wobei die Schale (3) einen mit der Einführöffnung (7) verbundenen Hohlraum (6) bildet, wobei der CO₂-Zylinder (2) in den Hohlraum (6) aufgenommen, der CO₂-Zylinder (2) in dem Hohlraum (6) fixiert und die Hülle (1) mit dem aufgenommenen CO₂-Zylinder (2) von einem Leergutautomaten zur Rücknahme von Mehrwegflaschen aufgenommen wird.

## Beschreibung

Die Erfindung betrifft eine Hülle für CO₂-Zylinder, eine Vorrichtung mit einem CO₂-Zylinder, sowie ein Verfahren zum Recyceln eines CO₂-Zylinders.

CO₂-Zylinder sind Gaskartuschen, die mit Kohlenstoffdioxid (CO₂) befüllt sind. Beispielsweise werden CO₂-Zylinder in Trinkwassersprudlern dazu verwendet, um Leitungswasser CO₂ zuzusetzen, um kohlensäurehaltiges Tafelwasser (Sodawasser) zu erzeugen. Dabei wird das Wasser in druckbeständige Flaschen gefüllt und druckdicht an eine Halterung des Trinkwassersprudlers geschraubt. Anschließend wird auf Knopfdruck über ein Leitungs- und Ventilsystem das Kohlenstoffdioxid in das Wasser eingeleitet, wobei durch Reaktion des Kohlenstoffdioxids (CO₂) mit Wasser (H₂O) Kohlensäure (H₂CO₃) gebildet wird. Über die Dauer des Einleitens des Kohlenstoffdioxids wird der Kohlensäuregehalt in dem hergestellten Sodawasser bestimmt.

Mit handelsüblichen CO₂-Zylindern, die mit etwa 300-500 g CO₂ befüllt sind, lassen sich bis zu 100 1 Sodawasser herstellen. Nach Entleeren eines CO₂-Zylinders wird dieser aus dem Trinkwassersprudler entfernt und anschließend entsorgt oder bei bestimmten Händlern, wie beispielsweise Supermärkten, gegen einen aufgefüllten CO₂-Zylinder getauscht. Aus Gründen des Umweltschutzes und der Reduzierung von Abfall ist ein Recyclen der CO₂-Zylinder durch Abgabe der leeren Zylinder bei einem Händler und anschließendem Wiederbefüllen einer Entsorgung der CO₂-Zylinder vorzuziehen.

Nachteiligerweise ist bei Händlern wie Supermärkten generell keine Rückgabe, sondern nur ein Tausch leerer gegen aufgefüllte CO₂-Zylinder möglich. Ein weiterer Nachteil besteht darin, dass für diesen Tausch das Kontaktieren eines Mitarbeiters notwendig ist, um den leeren CO₂-Zylinder abzugeben und einen aufgefüllten CO₂-Zylinder zu erhalten. Darüber hinaus werden die leeren CO₂-Zylinder unverpackt und ohne schützende Hülle zurückgegeben, sodass Beschädigungen der CO₂-Zylinder bei der Rückgabe und bei der weiteren Handhabung durch den Mitarbeiter des Händlers möglich sind.

Aus dem Stand der Technik sind verschiedene Hüllen für zylinderförmige Behältnisse bekannt, um diese thermisch zu isolieren, leichter zu transportieren oder optisch ansprechender zu gestalten. Die DE 1858289 U offenbart eine Tragepackung für Flaschen, wobei an der Außenseite Wulstrippen vorgesehen sind. Die Wulstrippen dienen als Pufferelemente und somit als eine Art Bruchsicherung. Die Tragepackung besteht aus Folienstücken und kann gegebenenfalls auch nur für eine einzelne Flasche ausgebildet sein. Eine weitere Schutzhülle für Flaschen ist in der DE 6753487 U gezeigt. Die offenbarte Hülle weist Rippen auf, die mit weiteren Hüllen in Verbindung gebracht werden, wodurch ein Verbund an Hüllen entsteht.

Die Aufgabe der vorliegenden Erfindung besteht darin, zumindest einzelne Nachteile der bekannten Verfahren zur Rückgabe bzw. zum Recyclen von CO₂-Zylindern zu lindern bzw. zu beheben. Die Erfindung setzt sich insbesondere zum Ziel, den Prozess der Rückgabe bzw. des Recyclings von CO₂-Zylindern zu verbessern.

Die Erfindung stellt eine Hülle für CO₂-Zylinder zur Verfügung, aufweisend eine Schale, wobei die Schale einen Hohlraum zum Aufnehmen eines CO₂-Zylinders bildet, wobei die Hülle von einem Leergutautomaten zur Rücknahme von Mehrwegflaschen aufnehmbar ist.

Dadurch wird die genannte Aufgabe gelöst.

Dementsprechend stellt die Erfindung auch eine Vorrichtung mit einem CO₂-Zylinder und einer Hülle für CO₂-Zylinder zur Verfügung, wobei die Hülle eine Schale aufweist und von einem Leergutautomaten zur Rücknahme von Mehrwegflaschen aufnehmbar ist, wobei die Schale einen Hohlraum zum Aufnehmen eines CO₂-Zylinders bildet, wobei der CO₂-Zylinder in der Hülle aufgenommen ist.

Auch dadurch wird die genannte Aufgabe gelöst.

Weiters stellt die Erfindung auch ein Verfahren zum Recyceln eines CO₂-Zylinders zur Verfügung. Das Verfahren weist zumindest die folgenden Schritte auf:
- Einführen eines CO₂-Zylinders in eine Einführöffnung einer Hülle mit einer Schale, wobei die Schale einen mit der Einführöffnung verbundenen Hohlraum bildet;
- Aufnehmen des CO₂-Zylinders in den Hohlraum;
- Fixieren des CO₂-Zylinders in dem Hohlraum; und
- Aufnehmen der Hülle mit dem aufgenommenen CO₂-Zylinder von einem Leergutautomaten zur Rücknahme von Mehrwegflaschen.

Auch dadurch wird die genannte Aufgabe gelöst.

Die Schale der erfindungsgemäßen Hülle begrenzt den Hohlraum zumindest teilweise, sodass ein CO₂-Zylinder aufgenommen werden und der Hohlraum offen sein kann. Dabei kann der CO₂-Zylinder teilweise aus dem Hohlraum ragen, sodass der CO₂-Zylinder zumindest teilweise in dem Hohlraum angeordnet ist. Dadurch, dass die Hülle derart ausgestaltet ist, dass diese von einem Leergutautomaten zur Rücknahme von Mehrwegflaschen aufgenommen werden kann, kann das bestehende System der Rückgabe von Pfandflaschen zum Recyclen von CO₂-Zylindern verwendet werden. Leergutautomaten dienen der Rücknahme von entleerten pfandpflichtigen Getränkeverpackungen, wie Mehrwegflaschen oder Getränkedosen. Dabei wird das Leergut gescannt, gewogen und per Mustererkennung automatisch auf Rücknahmefähigkeit geprüft. Durch diese Erkennung des Leerguts kann auch die erfindungsgemäße Hülle, in der ein CO₂-Zylinder aufgenommen ist, vom Leergutautomat automatisch erfasst und aufgenommen werden. Dabei sind eine manuelle Erfassung und Entgegennahme des leeren CO₂-Zylinders durch einen Mitarbeiter des Händlers nicht erforderlich. Ein weiterer Vorteil besteht darin, dass durch die Aufnahme des CO₂-Zylinders in den Hohlraum der Schale der CO₂-Zylinder besser vor mechanischen Beschädigungen geschützt ist.

Bei dem erfindungsgemäßen Verfahren wird der CO₂-Zylinder in die Einführöffnung der Hülle eingeführt und in den mit der Einführöffnung verbundenen Hohlraum der Schale der Hülle zumindest teilweise aufgenommen. Dadurch ist der CO₂-Zylinder zumindest teilweise in dem Hohlraum angeordnet und wird in diesem fixiert. Die Hülle mit dem im Hohlraum aufgenommenen CO₂-Zylinder wird von einem Leergutautomaten zur Rücknahme von Mehrwegflaschen aufgenommen. Dabei ist der Leergutautomat derart programmiert, erfindungsgemäße Hüllen mit aufgenommenen CO₂-Zylindern zu erkennen und diese aufzunehmen.

Gemäß einer bevorzugten Ausführungsform weist die Hülle eine Fixiervorrichtung zum Fixieren eines in dem Hohlraum der Schale aufgenommenen CO₂-Zylinders auf. Dadurch kann der CO₂-Zylinder in der Hülle positioniert und ein Herausfallen des CO₂-Zylinders aus der Hülle vermieden werden. Durch die Positionierung des CO₂-Zylinders in der Hülle können mechanische Beschädigungen des CO₂-Zylinders weiter reduziert werden.

Zum einfachen Bedienen der Fixiervorrichtung ist es günstig, wenn die Fixiervorrichtung zumindest einen Fixierhaken, bevorzugt zumindest zwei Fixierhaken, besonders bevorzugt genau zwei Fixierhaken, zum Fixieren eines in dem Hohlraum aufgenommenen CO₂-Zylinders, aufweist. Dadurch ist eine einfache und kostengünstige Herstellung der Fixiervorrichtung möglich.

Weiters ist es günstig, wenn die Hülle eine mit dem Hohlraum der Schale verbundene Einführöffnung zum Einführen eines CO₂-Zylinders in den Hohlraum aufweist. Dadurch kann der CO₂-Zylinder über die Einführöffnung einfach in den Hohlraum eingeführt werden. Vorteilhafterweise kann der CO₂-Zylinder über die Einführöffnung wieder aus dem Hohlraum entfernt werden, um den CO₂-Zylinder von der Hülle zu trennen.

Gemäß einer bevorzugten Ausführungsform ist die Fixiervorrichtung, insbesondere der zumindest eine Fixierhaken, an der Einführöffnung angeordnet. Dadurch kann der CO₂-Zylinder an der Einführöffnung fixiert werden, um ein Herausfallen des CO₂-Zylinders aus dem Hohlraum über die Einführöffnung zu verhindern.

Gemäß einer besonders bevorzugten Ausführungsform ist die Fixiervorrichtung, insbesondere der zumindest eine Fixierhaken, von einer ersten Position in eine zweite Position elastisch verformbar. Vorteilhafterweise wird beim Einführen des CO₂-Zylinders in die Einführöffnung die Fixiervorrichtung, insbesondere der zumindest eine Fixierhaken, von der ersten Position in die zweite Position elastisch verformt, um das Einführen des CO₂-Zylinders zu ermöglichen. Besonders bevorzugt kehrt die Fixiervorrichtung, insbesondere der zumindest eine Fixierhaken, bei Aufnahme des CO₂-Zylinders in dem Hohlraum in die erste Position zurück, um den CO₂-Zylinder besser zu fixieren.

Gemäß einer weiteren bevorzugten Ausführungsform weist die Schale zumindest eine Führungsschiene zum Führen eines CO₂-Zylinders in dem Hohlraum in eine erste Richtung auf. Dadurch kann das Einführen des CO₂-Zylinders in die Hülle erleichtert und der CO₂-Zylinder exakt in dem Hohlraum der Schale positioniert werden.

Zur verbesserten Erkennung der Aufnahme eines CO₂-Zylinders ist es günstig, wenn die Hülle eine mit dem Hohlraum der Schale verbundene Austrittsöffnung zum Austreten des Zylinderkopfes des CO₂-Zylinders aus dem Hohlraum aufweist. Bevorzugt ist die Austrittsöffnung auf einer der Eintrittsöffnung gegenüberliegenden Seite der Hülle angeordnet, damit beim Einführen des CO₂-Zylinders in die Einführöffnung und bei der Aufnahme in den Hohlraum der CO₂-Zylinder mit dem Zylinderkopf aus der Austrittsöffnung austreten und in dem Hohlraum fixiert werden kann.

Um die Herstellung der Hülle zu vereinfachen ist es günstig, wenn die Schale eine erste Teilschale und eine zweite Teilschale aufweist, wobei die erste und die zweite Teilschale miteinander verbunden sind, bevorzugt lösbar miteinander verbunden sind. Dadurch können die erste und die zweite Teilschale separat gefertigt und danach die Schale durch Verbinden der ersten mit der zweiten Teilschale hergestellt werden. Besonders bevorzugt sind die erste und die zweite Teilschale Spritzgussteile aus Kunststoff.

Weiters ist es günstig, wenn die erste Teilschale zumindest einen Arretierhaken und die zweite Teilschale zumindest eine korrespondierende Aufnahmeöffnung zum Aufnehmen des zumindest einen Arretierhakens der ersten Teilschale zum Verbinden der ersten mit der zweiten Teilschale aufweist. Dadurch kann die erste Teilschale einfach mit der zweiten Teilschale lösbar verbunden werden.

Gemäß einer besonders bevorzugten Ausführungsform weist die zweite Teilschale zumindest einen weiteren Arretierhaken und die erste Teilschale zumindest eine weitere korrespondierende Aufnahmeöffnung zum Aufnehmen des zumindest einen weiteren Arretierhakens der ersten Teilschale zum Verbinden der ersten mit der zweiten Teilschale auf. Dadurch ist eine verbesserte und stabilere lösbare Verbindung der ersten mit der zweiten Teilschale möglich.

Um die Herstellung der Hülle weiter zu vereinfachen ist es günstig, wenn die erste und die zweite Teilschale identisch sind. Dadurch können die erste und die zweite Teilschale kostengünstiger mithilfe derselben Maschine ohne Umrüsten hergestellt werden.

Gemäß einer bevorzugten Ausführungsform weist die Schale im Wesentlichen die äußere Form einer Mehrwegflasche auf. Dadurch ist die Hülle von einem Leergutautomaten zur Rücknahme von Mehrwegflaschen besonders einfach aufnehmbar.

Gemäß einer weiteren bevorzugten Ausführungsform besteht die Hülle aus einem Kunststoff, bevorzugt aus Polypropylen. Dadurch ist eine stabile und widerstandsfähige Ausgestaltung der Hülle bei geringem Gewicht möglich.

Es ist günstig, wenn der Hohlraum der Schale zum Aufnehmen eines CO₂-Zylinders mit einem Fassungsvolumen von 425 g CO₂ ist. Somit kann die Hülle zum Aufnehmen handelsüblicher CO₂-Zylinder verwendet werden.

Weiters ist es günstig, wenn zumindest die Fixiervorrichtung, insbesondere ein Fixierhaken, durch das Einführen des CO₂-Zylinders in die Einführöffnung von einer ersten Position in eine zweite Position elastisch verformt wird und bei Aufnahme des CO₂-Zylinders in dem Hohlraum die Fixiervorrichtung, insbesondere der Fixierhaken, in die erste Position zum Fixieren des CO₂-Zylinders zurückkehrt. Dadurch ist ein einfaches Fixieren des CO₂-Zylinders in dem Hohlraum der Schale möglich.

Die Erfindung wird nachstehend anhand dem in den Zeichnungen gezeigten, nicht einschränkenden Ausführungsbeispiel weiter erläutert:
Fig. 1 zeigt schematisch eine erfindungsgemäße Hülle für CO₂-Zylinder;
Fig. 2 zeigt schematisch die Hülle gemäß Fig. 1 mit voneinander gelösten Teilschalen;
Fig. 3 zeigt schematisch die Hülle gemäß Fig. 1 beim Einführen eines Zylinderkopfes eines CO₂-Zylinders in die Einführöffnung;
Fig. 4 zeigt schematisch die Hülle gemäß Fig. 1 beim Einführen eines Zylinderkörpers des CO₂-Zylinders gemäß Fig. 3 in die Einführöffnung;
Fig. 5 zeigt schematisch die erfindungsgemäße Vorrichtung mit einer Hülle gemäß Fig. 1 und einen in die Hülle aufgenommenen CO₂-Zylinder gemäß Fig. 3;
Fig. 6 zeigt ein Detail der Vorrichtung gemäß Fig. 5;
Fig. 7 zeigt eine Seitenansicht der Hülle und des CO₂-Zylinders gemäß Fig. 3;
Fig. 8 zeigt eine Seitenansicht der Vorrichtung gemäß Fig. 5.

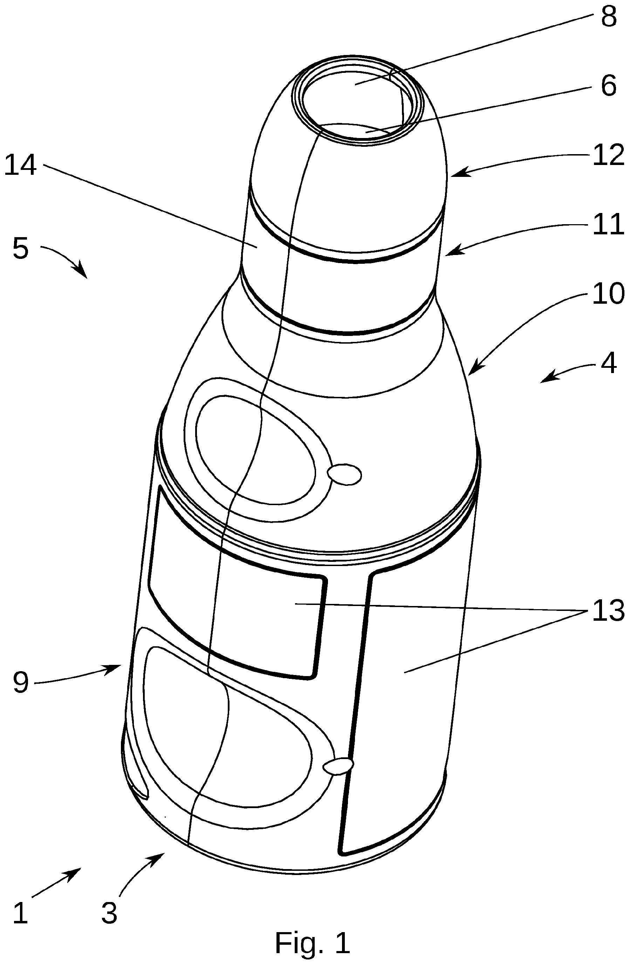

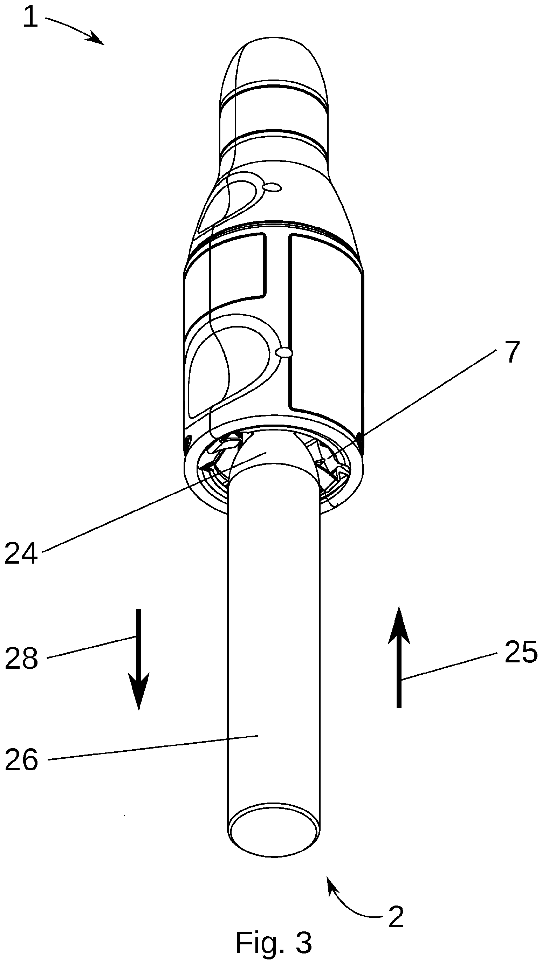

Fig. 1 zeigt eine erfindungsgemäße Hülle 1 für CO₂-Zylinder 2 (siehe Fig. 3-5), die eine Schale 3 aufweist. Die Hülle 1 besteht in dem gezeigten Ausführungsbeispiel aus Polypropylen. Die Schale 3 weist eine erste Teilschale 4 und eine zweite Teilschale 5 auf, die lösbar miteinander verbunden sind, wobei die Schale 3 die äußere Form einer Mehrwegflasche aufweist, sodass die Hülle 1 von einem Leergutautomaten zur Rücknahme von Mehrwegflaschen aufnehmbar ist. Die Schale 3 bildet bei Verbindung der ersten 4 mit der zweiten 5 Teilschale einen Hohlraum 6, in dem ein CO₂-Zylinder 2 aufnehmbar ist. Am Flaschenboden der im Wesentlichen Mehrwegflaschen-förmigen Schale 3 weist die Hülle 1 eine im Wesentlichen kreisrunde Einführöffnung 7 (siehe Fig. 3) auf, die mit dem Hohlraum 6 verbunden ist, sodass der Hohlraum 6 in Richtung Flaschenboden der im Wesentlichen Mehrwegflaschen-förmigen Schale 3 geöffnet ist. Auf einer gegenüberliegenden Seite der Schale 3 am Flaschenkopf der im Wesentlichen Mehrwegflaschen-förmigen Schale 3 weist die Hülle eine kreisrunde Austrittsöffnung 8 auf, die parallel zur Einführöffnung 7 angeordnet ist. Angrenzend an die Einführöffnung 7 weist die Schale 3 einen im Wesentlichen zylinderförmigen Abschnitt 9 auf, an den ein im Wesentlichen konisch-zusammenlaufender Abschnitt 10 angrenzt. An diesen im Wesentlichen konisch-zusammenlaufenden Abschnitt 10 grenzt in Richtung Austrittsöffnung 8 ein weiterer im Wesentlichen zylinderförmiger Abschnitt 11 und ein weiterer im Wesentlichen konisch-zusammenlaufender Abschnitt 12 an, die den Flaschenhals bzw. den Flaschenkopf der im Wesentlichen Mehrwegflaschen-förmigen Schale 3 bilden. Die Drehachsen der Einführöffnung 7, des im Wesentlichen zylinderförmigen Abschnitts 9, des im Wesentlichen konisch-zusammenlaufenden Abschnitts 10, des weiteren im Wesentlichen zylinderförmigen Abschnitts 11, des weiteren im Wesentlichen konisch-zusammenlaufenden Abschnitts 12 und der Austrittsöffnung 8 sind identisch. An der Außenfläche des im Wesentlichen zylinderförmigen Abschnitts 9 weist die Schale 3 vier Beschriftungsflächen 13, die eine glattere Oberfläche als die restliche Oberfläche der Schale 3 aufweisen. Dadurch können an den Beschriftungsflächen 13 Aufkleber, die beispielsweise das Logo des Vermarkters der Hülle 1 zeigen, angebracht werden. Weiters weist die Schale 3 an der Außenfläche des im Wesentlichen zylinderförmigen Abschnitts 11 eine ringförmige weitere Beschriftungsfläche 14 mit einer ebenfalls glatteren Oberfläche als die restliche Oberfläche der Schale 3 auf, um Aufkleber anzubringen.

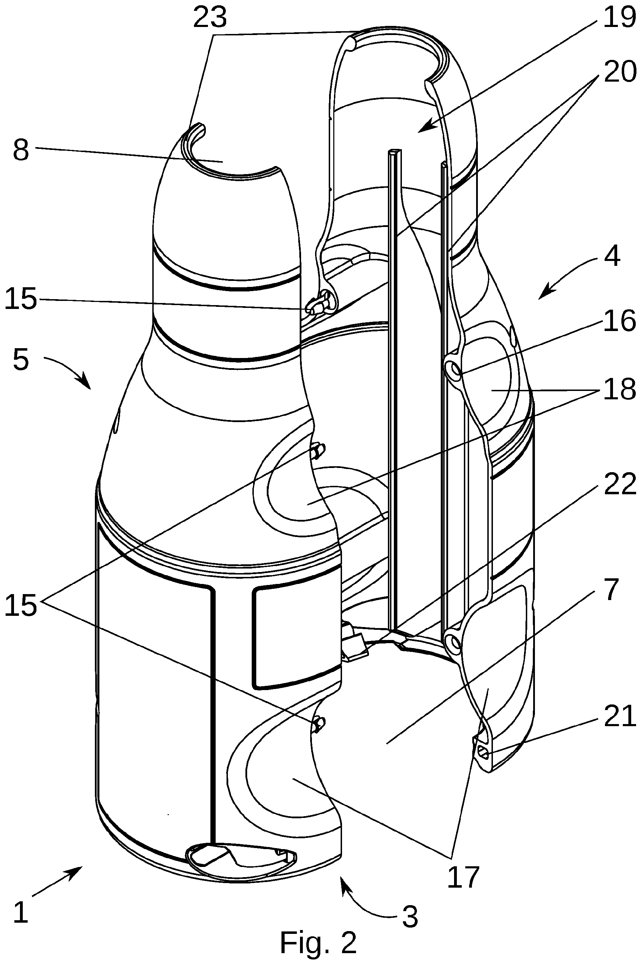

Fig. 2 zeigt die Hülle 1 gemäß Fig. 1, wobei die erste Teilschale 4 von der zweiten Teilschale 5 gelöst ist. Die erste 4 und die zweite 5 Teilschale sind identische Spritzgussteile aus Polypropylen. Die Verbindungsfläche zwischen der ersten 4 und der zweiten 5 Teilschale verläuft vertikal durch die im Wesentlichen Mehrwegflaschen-förmige Schale 3 und senkrecht zur Einführöffnung 7 sowie zur Austrittsöffnung 8. Die erste 4 und die zweite 5 Teilschale weisen jeweils an der vertikalen Verbindungsfläche zum Verbinden mit der jeweils anderen Teilschale zwei direkt übereinander angeordnete Arretierhaken 15 und zwei direkt übereinander angeordnete korrespondierende Aufnahmeöffnungen 16 zum Aufnehmen der Arretierhaken 15 auf. Dabei sind jeweils ein Arretierhaken 15 und eine Aufnahmeöffnung 16 in der selben zur Einführöffnung 7 parallelen horizontalen Ebene an der vertikalen Verbindungsfläche in einem Abstand zueinander angeordnet, wobei dieser Abstand dem Außendurchmesser eines handelsüblichen CO₂-Zylinders aus Aluminium mit einem Fassungsvolumen von 425 g CO₂ entspricht. Um die Arretierhaken 15 jeweils in diesem Abstand von den Aufnahmeöffnungen 16 anzuordnen, sind die Arretierhaken 15 und die Aufnahmeöffnungen 16 in schalenförmigen Einbuchtungen 17 an dem im Wesentlichen zylinderförmigen Abschnitt 9 und in weiteren schalenförmigen Einbuchtungen 18 an dem im Wesentlichen konisch-zusammenlaufenden Abschnitt 10 angeordnet. Bei Verbindung der ersten 4 mit der zweiten 5 Teilschale nimmt jeweils eine Aufnahmeöffnung 16 einen Arretierhaken 15 lösbar auf, sodass in zwei unterschiedlichen Abständen zu der Einführöffnung 7 jeweils zwei Verbindungen eines Arretierhakens 15 mit einer Aufnahmeöffnung 16 angeordnet sind.

An einer Innenfläche der ersten 4 und der zweiten 5 Teilschale ist jeweils parallel zur vertikalen Verbindungsfläche und senkrecht zur Einführöffnung 7 eine Führungsschiene 19 angeordnet, die jeweils zwei parallele Schienenkörper 20 umfasst. Der Abstand der Führungsschiene 19 der ersten Teilschale 4 zur Führungsschiene 19 der zweiten Teilschale 5 entspricht ebenfalls dem Außendurchmesser eines handelsüblichen CO₂-Zylinders mit einem Fassungsvolumen von 425 g CO₂. Mithilfe der zueinander beabstandeten Verbindungen der Arretierhaken 15 mit den Aufnahmeöffnungen 16 und der zueinander beabstandeten Führungsschienen 19 kann ein handelsüblicher CO₂-Zylinder in dem Hohlraum 8 der Schale 3 derart angeordnet werden, dass dieser durch die Arretierhaken 15, die Aufnahmeöffnungen 16 und die Führungsschienen 19 begrenzt und in eine horizontale Richtung parallel zur Einführöffnung 7 nicht verschiebbar ist.

An einer unteren, der Einführöffnung 7 zugewandten Seite der Schale 3 weist die erste 4 und die zweite 5 Teilschale in der vertikalen Verbindungsebene jeweils zwei Verbindungsvorrichtungen 21 auf, die mit den zwei Verbindungsvorrichtungen der jeweils anderen Teilschale lösbar verbunden werden. Ebenfalls an der unteren, der Einführöffnung 7 zugewandten Seite der Schale weist die erste 4 und die zweite 5 Teilschale jeweils einen Fixierhaken 22 auf, der in der Ebene der Einführöffnung 7 angeordnet ist und in die Einführöffnung 7 ragt. Die beiden Fixierhaken 22 sind elastisch verformbar und derart an der ersten 4 bzw. zweiten 5 Teilschale angeordnet, dass im verbundenen Zustand der beiden Teilschalen die Fixierhaken 22 an zwei gegenüberliegenden Seiten der im Wesentlichen kreisrunden Einführöffnung 7 angeordnet sind, wobei durch das Hineinragen der Fixierhaken 22 in die Einführöffnung 7 der Abstand der beiden Fixierhaken 22 geringer ist als der Durchmesser der Einführöffnung 7.

An einer oberen, der Austrittsöffnung 8 zugewandten Seite der Schale 3 weisen die erste 4 und die zweite 5 Teilschale eine im verbundenen Zustand der beiden Teilschalen die Austrittsöffnung 8 begrenzende Wölbung 23 auf. Bei Verbindung der ersten 4 mit der zweiten 5 Teilschale bilden die Wölbungen 23 einen Ring mit einem Innendurchmesser, der dem Außendurchmesser eines Zylinderkopfes eines handelsüblichen CO₂-Zylinders entspricht.

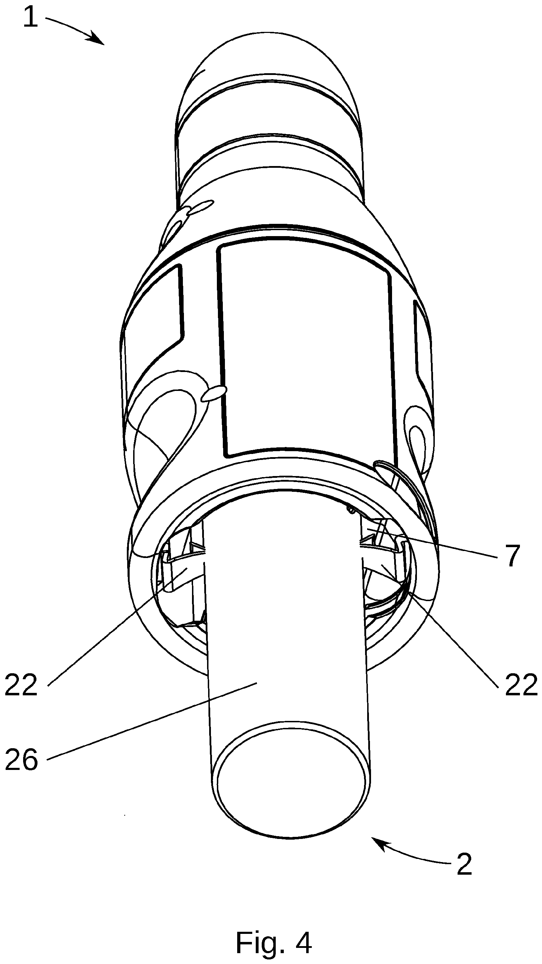

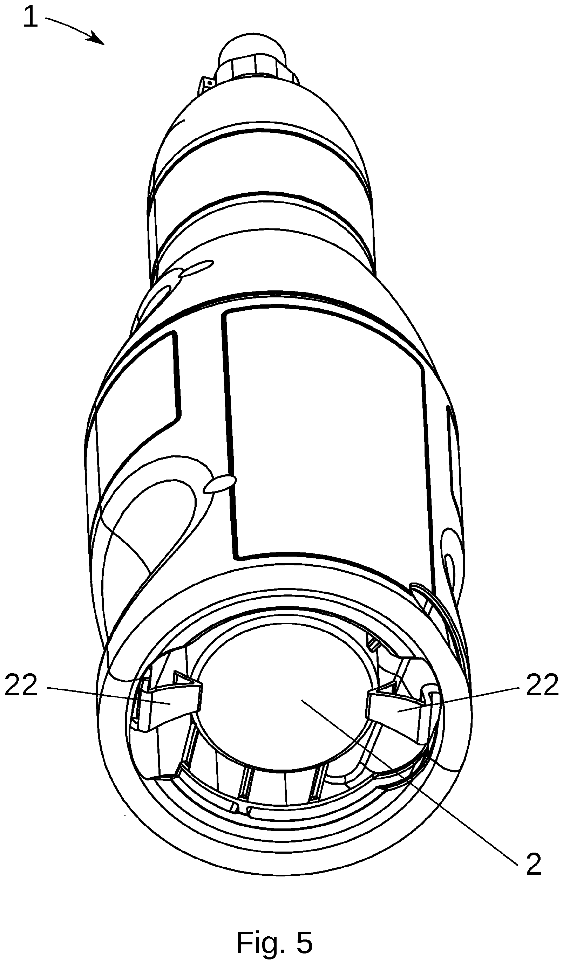

Fig. 3 und 4 zeigen die Hülle 1 gemäß Fig. 1 beim Einführen eines CO₂-Zylinders 2 in die Einführöffnung 7. Der CO₂-Zylinder 2 wird mit dem Zylinderkopf 24 des CO₂-Zylinders 2 voraus in die Einführöffnung 7 der Hülle 1 geführt und mithilfe der Führungsschienen 19 in den Hohlraum 6 der Schale 3 in eine erste Richtung 25 geführt. Dabei ist die erste Richtung 25 parallel zu den Schienenkörpern 20 der Führungsschienen 19 und senkrecht zur Einführöffnung 7. Beim weiteren Einführen des CO₂-Zylinders 2 gelangt nach dem Zylinderkopf 24 der Zylinderkörper 26 zur Einführöffnung 7, wobei beim Einführen des Zylinderkörpers 26 in die Einführöffnung 7 die beiden in die Einführöffnung 7 ragenden elastisch verformbaren Fixierhaken 22 vom Zylinderkörper 26 in die erste Richtung 25 von einer ersten Position in eine zweite Position verformt werden. Während des Einführens des Zylinderkörpers 26 des CO₂-Zylinders 2 in die Einführöffnung 7 der Hülle 1 liegen, wie in Fig. 4 gezeigt, die Fixierhaken 22 in der zweiten Position an dem Zylinderkörper 26 an, bis der CO₂-Zylinder 2 vollständig in die Einführöffnung 7 eingeführt und in den Hohlraum 6 der Schale 3 aufgenommen wurde. Nachdem der Zylinderkörper 26 des CO₂-Zylinders 2 an den Fixierhaken 22 vorbeigeführt wurde, kehren, wie in Fig. 5 gezeigt, die elastisch verformbaren Fixierhaken 22 wieder in die erste Position zurück. Somit ist der CO₂-Zyinder 2 in der Hülle 1 aufgenommen, sodass eine erfindungsgemäße Vorrichtung gebildet wurde.

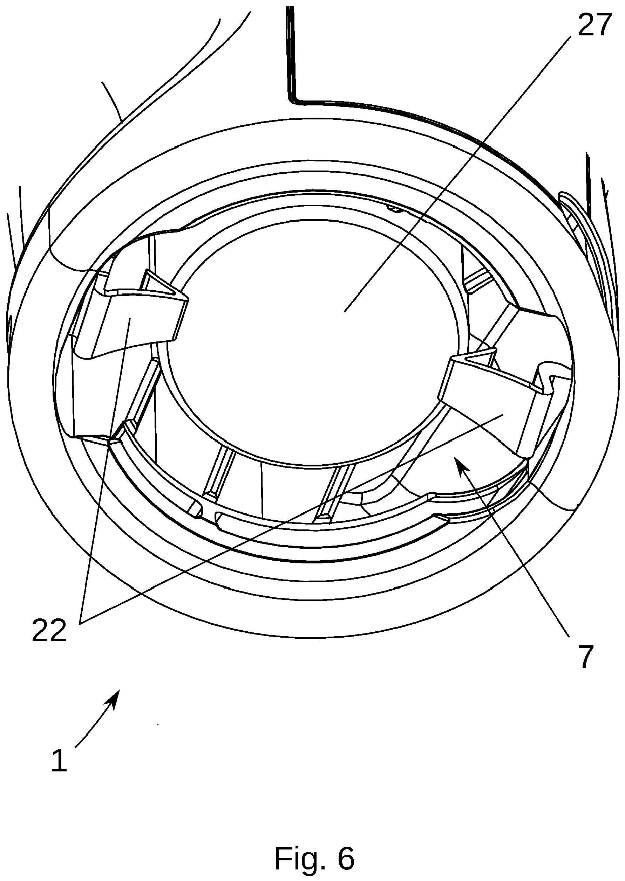

Fig. 6 zeigt ein Detail der Hülle 1 mit dem darin aufgenommenen CO₂-Zylinder 2 gemäß Fig. 5 im Bereich der Einführöffnung 7. Der CO₂-Zylinder 2 liegt mit einer dem Zylinderkopf 24 gegenüberliegenden Bodenfläche 27 jeweils an einer L-förmigen Lasche der beiden Fixierhaken 22 an. Dadurch, dass die Fixierhaken 22 nur mit erheblichem Kraftaufwand in eine der ersten Richtung 25 entgegengesetzten zweiten Richtung 28 elastisch verformbar sind, wird durch die Fixierhaken 22 der CO₂-Zylinder 2 an einem Herausrutschen aus dem Hohlraum 6 der Schale 3 gehindert.

Zum Entfernen des CO₂-Zylinders 2 aus der Hülle 1 werden die Fixierhaken 22 mithilfe eines dafür vorgesehenen Werkzeugs oder händisch in die erste Richtung 25 von einer ersten Position in eine zweite Position verformt, um den CO₂-Zylinder 2 von den Fixierhaken 22 zu lösen. Anschließend kann der CO₂-Zylinder 2 über die Einführöffnung 7 in der zweiten Richtung 28 aus dem Hohlraum 6 bewegt werden. Nachdem der CO₂-Zylinder 2 den Hohlraum 6 verlassen hat, kehren die Fixierhaken 22 von der zweiten in die erste Position zurück, sodass in die Hülle 1 erneut ein CO₂-Zylinder aufgenommen werden kann.

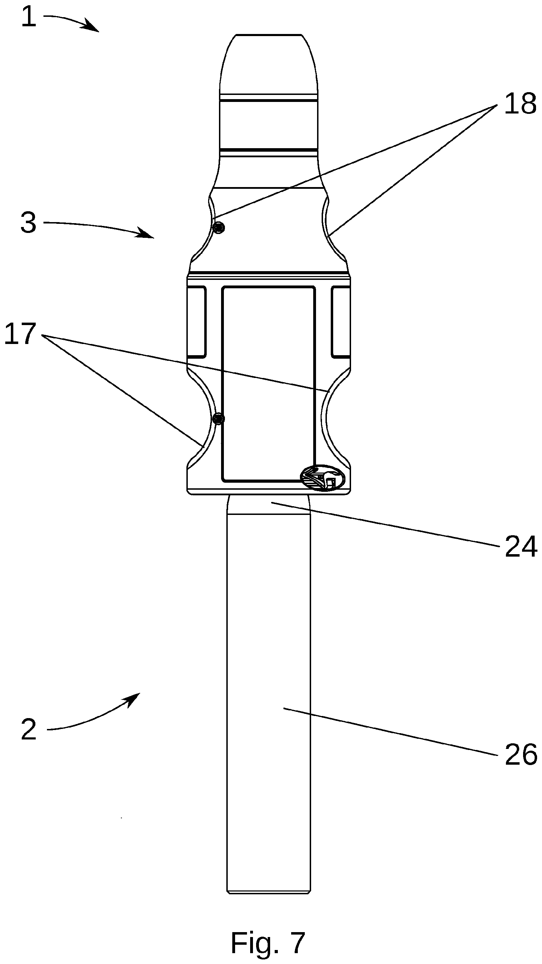

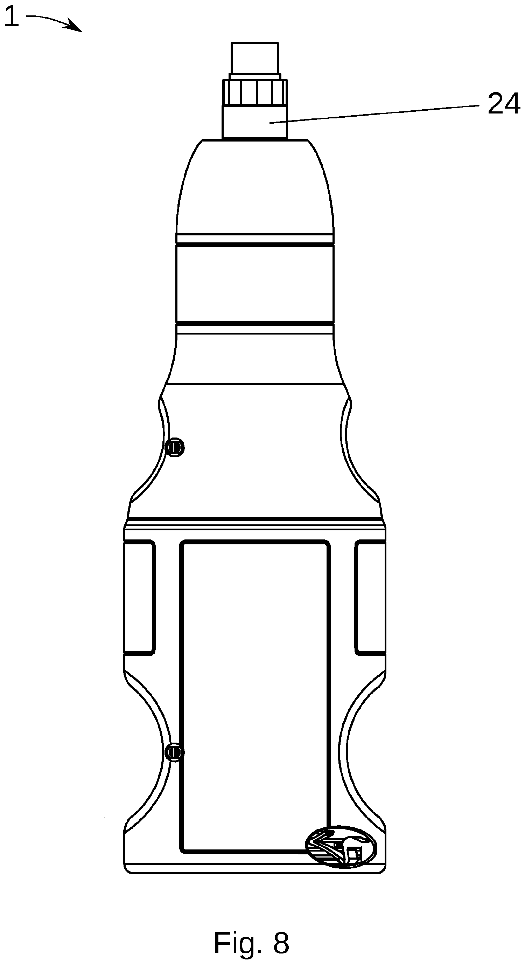

Fig. 7 und 8 zeigen die Hülle 1 und den CO₂-Zylinder 2 gemäß Fig. 4 bzw. Fig. 5. Wie in Fig. 7 gezeigt, dienen die schalenförmigen Einbuchtungen 17 und die weiteren schalenförmigen Einbuchtungen 18 zusammen mit den an diesen Einbuchtungen angeordneten Arretierhaken 15 und Aufnahmeöffnungen 16 der Begrenzung des Hohlraums 6 der Schale 3, um den im Hohlraum 6 aufgenommenen CO₂-Zylinder 2 zu positionieren. Wie in Fig. 8 gezeigt, ist die Höhe der Hülle 1 geringer als die Höhe des CO₂-Zylinders 2, sodass beim Fixieren des CO₂-Zylinders 2 in dem Hohlraum 6 der Hülle 1 der CO₂-Zylinder 2 aus der Austrittsöffnung 8 herausragt. Dabei ist die Höhe der Hülle 1 derart gewählt, dass der CO₂-Zylinder 2 in dem Hohlraum 6 zwischen den Führungsschienen 19, den Arretierhaken 15 und den Aufnahmeöffnungen 16 einerseits und der Wölbung 23 und den Fixierhaken 22 andererseits fixiert ist. Der derart in der Hülle 1 angeordnete CO₂-Zylinder 2 kann zusammen mit der Hülle 1 aufgrund der Form der Hülle 1 von einem Leergutautomaten zur Rücknahme von Mehrwegflaschen aufgenommen werden. Dadurch, dass der Zylinderkopf 24 aus der Hülle 1 herausragt, kann ein Leergutautomat erkennen, ob ein CO₂-Zylinder 2 in der Hülle 1 angeordnet ist und somit ein missbräuchliches Rückführen von leeren oder mit anderen Gegenständen befüllten Hüllen 1 vermieden werden.

## Patentansprüche

1. Hülle (1) für CO₂-Zylinder (2), aufweisend eine Schale (3), wobei die Schale (3) einen Hohlraum (6) zum Aufnehmen eines CO₂-Zylinders (2) bildet, **dadurch gekennzeichnet, dass** die Hülle (1) von einem Leergutautomaten zur Rücknahme von Mehrwegflaschen aufnehmbar ist.

2. Hülle (1) nach Anspruch 1, **gekennzeichnet durch** eine Fixiervorrichtung zum Fixieren eines in dem Hohlraum (6) der Schale (3) aufgenommenen CO₂-Zylinders (2).

3. Hülle (1) nach Anspruch 2, **dadurch gekennzeichnet, dass** die Fixiervorrichtung zumindest einen Fixierhaken (22), bevorzugt zumindest zwei Fixierhaken (22), besonders bevorzugt genau zwei Fixierhaken (22), zum Fixieren eines in dem Hohlraum (6) aufgenommenen CO₂-Zylinders (2), aufweist.

4. Hülle (1) nach einem der Ansprüche 1 bis 3, **gekennzeichnet durch** eine mit dem Hohlraum (6) der Schale (3) verbundene Einführöffnung (7) zum Einführen eines CO₂-Zylinders (2) in den Hohlraum (6).

5. Hülle (1) nach Anspruch 2 oder 3 und nach Anspruch 4, **dadurch gekennzeichnet, dass** die Fixiervorrichtung, insbesondere der zumindest eine Fixierhaken (22), an der Einführöffnung (7) angeordnet ist.

6. Hülle (1) nach einem der Ansprüche 1 bis 5, **dadurch gekennzeichnet, dass** die Schale (3) zumindest eine Führungsschiene (19) zum Führen eines CO₂-Zylinders (2) in dem Hohlraum (6) in eine erste Richtung (25) aufweist.

7. Hülle (1) nach einem der Ansprüche 1 bis 6, **gekennzeichnet durch** eine mit dem Hohlraum (6) der Schale (3) verbundene Austrittsöffnung (8) zum Austreten des Zylinderkopfes (24) des CO₂-Zylinders (2) aus dem Hohlraum (6).

8. Hülle (1) nach einem der Ansprüche 1 bis 7, **dadurch gekennzeichnet, dass** die Schale (3) eine erste Teilschale (4) und eine zweite Teilschale (5) aufweist, wobei die erste (4) und die zweite (5) Teilschale miteinander verbunden sind, bevorzugt lösbar miteinander verbunden sind.

9. Hülle (1) nach Anspruch 8, **dadurch gekennzeichnet, dass** die erste Teilschale (4) zumindest einen Arretierhaken (15) und die zweite Teilschale (5) zumindest eine korrespondierende Aufnahmeöffnung (16) zum Aufnehmen des zumindest einen Arretierhakens (15) der ersten Teilschale (4) zum Verbinden der ersten (4) mit der zweiten (5) Teilschale aufweist.

10. Hülle (1) nach Anspruch 8 oder 9, **dadurch gekennzeichnet, dass** die erste (4) und die zweite (5) Teilschale identisch sind.

11. Hülle (1) nach einem der Ansprüche 1 bis 10, **dadurch gekennzeichnet, dass** die Schale (3) im Wesentlichen die äußere Form einer Mehrwegflasche aufweist.

12. Hülle (1) nach einem der Ansprüche 1 bis 11, **dadurch gekennzeichnet, dass** die Hülle (1) aus einem Kunststoff, bevorzugt aus Polypropylen, besteht.

13. Vorrichtung mit einem CO₂-Zylinder (2), **gekennzeichnet durch** eine Hülle (1) nach einem der Ansprüche 1 bis 12, wobei der CO₂-Zylinder (2) in der Hülle (1) aufgenommen ist.

14. Verfahren zum Recyceln eines CO₂-Zylinders (2), aufweisend die folgenden Schritte:
- Einführen eines CO₂-Zylinders (2) in eine Einführöffnung (7) einer Hülle (1) mit einer Schale (3), wobei die Schale (3) einen mit der Einführöffnung (7) verbundenen Hohlraum (6) bildet;
- Aufnehmen des CO₂-Zylinders (2) in den Hohlraum (6);
- Fixieren des CO₂-Zylinders (2) in dem Hohlraum (6); und
- Aufnehmen der Hülle (1) mit dem aufgenommenen CO₂-Zylinder (2) von einem Leergutautomaten zur Rücknahme von Mehrwegflaschen.

15. Verfahren nach Anspruch 14, **dadurch gekennzeichnet, dass** zumindest eine Fixiervorrichtung, insbesondere ein Fixierhaken (22), durch das Einführen des CO₂-Zylinders (2) in die Einführöffnung (7) von einer ersten Position in eine zweite Position elastisch verformt wird und bei Aufnahme des CO₂-Zylinders (2) in dem Hohlraum (6) die Fixiervorrichtung, insbesondere der Fixierhaken (22), in die erste Position zum Fixieren des CO₂-Zylinders (2) zurückkehrt.
